Europäisches Patentamt

European Patent Office

Office européen des brevets

(11) Publication number: **0 274 395**
**A2**

# (12) EUROPEAN PATENT APPLICATION

(21) Application number: **88100161.4**

(22) Date of filing: **07.01.88**

(51) Int. Cl.⁴: **B 01 J 39/04**

(30) Priority: **07.01.87 US 1210**

(43) Date of publication of application:
**13.07.88 Bulletin 88/28**

(84) Designated Contracting States: **CH FR IT LI**

(71) Applicant: **The Graver Company**
**2720 U.S. Highway 22**
**Union New Jersey 07083 (US)**

(72) Inventor: **Kunin, Robert**
**1318 Moon Drive**
**Yardley Pennsylvania 19067 (US)**

**Salem, Eli**
**80 Roseld Avenue**
**Deal New Jersey 07712 (US)**

(74) Representative: **Strehl, Schübel-Hopf, Groening, Schulz**
**Widenmayerstrasse 17 Postfach 22 14 55**
**D-8000 München 22 (DE)**

(54) Stabilization of cation exchange resins used in precoat filters.

(57) A method for substantially stabilizing a powdered cation exchange resin containing free acid leachables for use in precoat filters comprises scavenging the acid leachables by combining the cation exchange resin with a gel-type anion exchange resin having a relatively low degree of crosslinking and a relatively high moisture content and grinding the resulting resin combination to form a powder having a particle size with a U.S. mesh number from about 30 mesh to about 400 mesh.

EP 0 274 395 A2

**Description**

## STABILIZATION OF CATION EXCHANGE RESINS USED IN PRECOAT FILTERS

Technical Field

The present invention relates to a method for increasing the shelf life stability of ion exchange resins, in particular, powdered cation exchange resins.

Background Of The Invention

Ion exchange resins are widely used in many industrial and domestic applications, especially for softening water. For most applications, ion exchange resins represent a considerable capital investment. As a result, the resins must function efficiently over extended periods of time so their cost can be justified. In the case of powdered ion exchange resins used in precoat technology, the ground resins are produced and stored over prolonged periods of time prior to use without any rinse. Any instability during storage can be very troublesome.

Instability of resins is a well-known problem which over a period of time produces a loss in total ion exchange capacity, or a loss in floccing (aggregation) efficiency, and results in a generally reduced effective life of the powdered ion exchange resins used as precoat filters.

A well-known cause of instability of cation exchange resins is the presence of polymeric, uncrosslinked acids that remain in the resin matrix following manufacture. Cation exchange resins are crosslinked polymers that have a diffusible cationic group and a non-diffusible anionic group in the resin matrix that is usually derived from a sulfonic acid, carboxylic acid, benzoic acid or phosphonic acid. A certain amount of free, unreacted acid, however, usually remains in the resin matrix in a leachable state.

The presence of diffusible, polymeric acid in the ion exchange resin matrix is undesirable. If this acid is not removed from the cation exchange resin, it can migrate through the ion exchange resin during storage, or it can leach from the ion exchange resin during use to change the effective ion exchange characteristics and to shorten the useful shelf life of the anion exchange resin with which it is usually associated.

Powdered cation exchange resins are often used in the preparation of precoat filter media. The presence of leachable, polymeric acid in a cation exchange resin is particularly undesirable, because any instability of the cation exchange resin due to the presence of the leachable acid will shorten the useful life of the precoat filter. Precoat filters are widely used in industrial applications. A particularly well-known precoat filter medium comprises a powdered mixture of a strongly acidic cation exchange resin and a strongly basic anion exchange resin which is commercially available under the trademark "POWDEX" from the assignee of this invention. The preparation of premixed precoat filter media with these resins is described by Bass in U.S. Patent No. 4,252,905.

Cation exchange resins that are used in finely powdered form for filter media are preferably of a strongly acidic styrene-divinylbenzene type having active acid groups of sulfonic acid. Polystyrene sulfonic acids and aromatic sulfonic acids having relatively high molecular weights can remain in a free leachable state in these cation exchange resins and can interfere with the performance of the filter precoat. Leaching of acid during the preparation of the precoat filter medium causes the cation exchange resin to aggregate improperly when it is mixed with a powdered, strongly basic anion exchange resin. In addition, any free sulfonic acid that is present in the precoat filter can accumulate and result in corrosion within the steam generators of a power plant.

Although powdered cation exchange resins are mixed with powdered strongly basic anion exchange resins in precoat filters, these anion exchange resins are usually unable to adsorb the leachable polymeric acid from the cation exchange resin. As a result, cation exchange resins that are stored for prolonged periods in powdered form for use in precoat filters must be rinsed with hot water prior to use. That process is cumbersome and costly.

Powdered cation exchange resins in the ammonium form are particularly useful in condensate polishing applications. However, cation exchange resins of the sulfonated polystyrene divinylbenzene type are particularly troublesome because the instability of such resins shortens the shelf life of a precoat filter medium that is prepared therewith.

There is a need, therefore, for a method for increasing the shelf life stability of powdered, cation exchange resins, especially those in the ammonium form, to make such resins suitable for use in a precoat filter medium, even after prolonged shelf storage. This invention relates to such a method.

Summary Of The Invention

The method of this invention provides a substantially stabilized powdered, cation exchange resin of the sulfonated polystyrene type even after storage for an extended period of time. This is particularly useful for the preparation of cation exchange resins in the ammonium form which are suitable for use in filter precoats. The present method minimizes the instability of a powdered, strongly acidic cation exchange resin which may result from the presence of soluble, uncrosslinked acid that remains in the resin matrix following manufacture of the resin. Such leachables can also develop during storage due to oxidative reactions with the atmosphere. Conventional hot water rinse steps to rejuvenate the resin can be eliminated with an attendant increase in shelf life and precoat filter efficiency.

Briefly, the resin stabilizing method of the present invention comprises the steps of providing a strongly acidic cation exchange resin having a styrene-divinylbenzene resin matrix containing sulfonic acid leachables, combining the cation exchange resin with a strongly basic, porous gel-type anion exchange resin to scavenge the acid leachables, and grinding the resulting resin combination to produce a finely-divided particulate material that maintains a predetermined floccing capacity upon storage for six months or more.

The gel-type anion exchange resin is a strongly basic styrene-divinylbenzene type that has a relatively low degree of crosslinking and has a moisture content of at least about 55 percent, based on the total weight of the resin. To scavenge the acid leachables from the cation exchange resin, the gel-type anion exchange resin is combined therewith in a relatively small amount (from about 3 percent to about 15 percent anion exchange resin based on the total weight of the resins), and the resulting combination is ground to the consistency of a powder, for example, in a hammer mill. This is unlike a conventional precoat filter medium in which a cation exchange resin is mixed with a relatively large amount of a highly crosslinked anion exchange resin.

In a preferred embodiment of this invention, a powdered cation exchange resin in the ammonium form is stabilized with an anion exchange resin in the hydroxide form. A powdered resin combination provided by the method of this invention has a finely-divided particle size distribution and has a U.S. mesh number from about 30 mesh to about 400 mesh.

One benefit of the method of this invention is the production of a substantially stabilized powdered cation exchange resin containing ammonium ions that has an increased shelf life. Another advantage is that a powdered cation exchange resin stabilized according to this invention is particularly useful in the preparation of a precoat filter medium that can maintain a predetermined floccing range.

Still further benefits and advantages of the present invention will be apparent to those skilled in the art from the detailed description and the Examples that follow.

Detailed Description Of The Invention

As used herein, the term "resin matrix" refers to a molecular network including an ion exchange resin that carries fixed ions.

The term "strongly acidic cation exchange resin" refers to a cation exchange resin whose active group is the sulfonic acid group ($RSO_3H$) having a $pK_a$ generally below a value of about 3.5, and the term "strongly basic anion exchange resin" refers to an anion exchange resin whose active group is the quaternary ammonium group [(R. Kunin, Ion Exchange Resins, 2nd Edition, Robert F. Krieger Publishing Company, Inc., Malabar, FL (1985)].

Strongly acidic cation exchange resins having a resin matrix of styrene-divinylbenzene and containing active sulfonic acid groups are preferred for use in the present precoat filters. Typically, these resins are either in the hydrogen ($H^+$) form or in the ammonium ($NH_4^+$) form. Suitable cation exchange resins are commercially available under the designations "DOWEX HGR-S" (Dow Chemical Company, Midland, MI); "AMBERLITE IR-120" (Rohm And Haas Company, Philadelphia, PA); "IONAC C-267" (Ionac Chemical Company, Birmingham, NJ); and "KASTEL $H^+$" (Montecatini, Italy).

The degree of swelling of an ion exchange resin influences the exchange equilibria and, thus, the selectivity of the resin. At low degrees of crosslinking, a resin can swell considerably and the resulting fixed ion concentrations are low. On the other hand, at high degrees of crosslinking, the swelling of the resin is minimal and the fixed ion concentrations are high, resulting in a greater degree of ion-ion interactions. A discussion of the relationships between resins having varying degrees of crosslinking and ion exchange equilibrium may be found in R. Kunin, Ion Exchange Resins, pages 17-26, 2nd Edition, Robert F. Krieger Publishing Company, Inc., Malabar, FL (1985).

In the practice of the resin stabilizing method of this invention, a strongly basic anion exchange resin that is slightly crosslinked is preferred. The term "slightly crosslinked" refers to an anion exchange resin having a relatively low degree of crosslinking in the range of about 1 to 4 percent, preferably from about 1 to 2 percent.

Suitable anion exchange resins preferably have a styrene-divinylbenzene copolymer resin matrix and a water content from about 55 percent to about 80 percent, more preferably from about 60 percent to about 65 percent, based on the total weight of the resin. Thus, these slightly crosslinked anion exchange resins are high-swelling, gel-type resins, unlike the low-swelling, strongly basic anion exchange resins typically used in precoat filters which are highly crosslinked anion exchange resins. Hereafter, the term "gel-type resin" refers to the slightly crosslinked anion exchange resin as defined herein. Particularly preferred anion exchange resins are the highly porous anion exchange resins.

Suitable gel-type anion exchange resins that are strongly basic are available under the designation "Amberlite IRA-401" or "AMBERLITE IRA-411", in the chloride form, and "AMBERLITE IRA-400", in either the hydroxide or chloride form (Rohm And Haas Company, Philadelphia, PA). A particularly preferred anion exchange resin is the highly porous, type II resin, "AMBERLITE IRA-411", converted to the hydroxyl form which has a degree of crosslinking of about 2 percent.

For use in precoat filters, the cation exchange resin, must be ground to a relatively fine particle size which may be measured by U.S. standard sieve analysis. The size of the particles can also be measured with a standard electronic counting method, such as by using a Coulter Counter Model TA-II sold by Coulter Electronics, Inc. of Hialeah, FL. The dimension determined by the Coulter Counter is the diameter of a sphere having the same volume as that of the particle measured.

Ion exchange resins having a particle size from about 10 microns to about 250 microns (less than about 400 mesh to about 50 mesh) are referred to herein as "finely-divided resin particles". Resin particles in a range of about 250 microns to about 84 microns (about 60 mesh to abut 20 mesh) are referred to as "large bead resin particles". Resin particles smaller than about 32 microns are referred to as "fines". The typical range of finely-divided resins used in precoat filter elements is between a U.S. mesh number of about 60 mesh and 400 mesh, but filter elements that are designed to resist fouling an blocking by particles having a U.S. mesh number greater than 400 mesh, i.e., fines, can achieve a substantial increase in ion exchange efficiency by using fines.

Resins that are ground to a finely-divided particle size, but which contain an amount of large bead resin particles are referred to herein as powdered resins. Powdered resins have a particle size with a U.S. mesh number in the range of between about 30 mesh and about 400 mesh, with the majority of the particles (i.e., about 90 percent) in the range of about 45 mesh to about 400 mesh.

As is generally known in the art, a powdered cation exchange resin deteriorates upon storage, due to the presence of uncrosslinked, polymeric acids that can leach from the matrix of the resin. A powdered cation exchange resins in the ammonium form (hereinafter a PCN) is the least stable, and this instability has been attributed to the presence of organic acid leachables, such as high molecular weight sulfonic acids. The shelf life of a PCN is typically less than about 4 months, based on its measured floccing capacity in the presence of an anion exchange resin. These leachable acids interfere with the preparation of precoat filters which depend on floccing (aggregation) of the powdered cation exchange resin with a powdered anion exchange resin.

Floccing capacity is determined by titrating the cation exchange resin in water with a strongly basic anion exchange resin, as further described herein, to a predetermined end point based on the clarity of the supernatant.

A PCN, stabilized by the method of this procedure, is substantially stabilized. Its shelf life is increased to greater than seven months, based on its floccing capacity as determined by standard techniques as further described herein. The floccing capacity is indicative of the cation-anion ratio useful in producing a stable precoat filter medium according to the present method.

The resin stabilizing method described herein increases the shelf life of a PCN by scavenging the leachable acid present in the PCN. This scavenging is accomplished by combining the cation exchange resin with a relatively small amount of a gel-type anion exchange resin, as defined above, before grinding the resin, and then grinding the resin combination to a relatively fine particle size. For purposes of illustrating the resin stabilizing method of this invention, a powdered resin is obtained by grinding the resin combination in a hammer mill.

For scavenging the acid leachables, a relatively small amount of about 3 percent to about 15 percent, preferably about from 5 percent to about 10 percent, of a gel-type anion exchange resin is used, based on the weight of the resin combination. At this proportion, the resin combination is not a functional filter precoat medium. Filter precoat media typically contain relatively high amounts of about 25 percent to about 50 percent of an anion exchange resin of a type which, as discussed above, is not within the definition of the scavenging anion exchange resin of this invention. Although gel-type anion exchange resins are preferred for grinding, one could use a macroreticular anion exchange resin.

A preferred substantially stabilized powdered cation exchange resin comprises from about 90 percent to about 95 percent of a strongly acidic cation exchange resin in the ammonium form having a styrene-divinylbenzene matrix, from about 5 percent to about 10 percent of a strongly basic gel-type anion exchange resin in the hydroxide form having a styrene-divinylbenzene matrix that is slightly crosslinked and has a moisture content of about 55 percent to about 80 percent. The powdered resin has a particle size distribution with a U.S. mesh number in the range of from about 30 mesh to greater than about 400 mesh and has a predetermined, measurable floccing capacity that is maintained upon storage for a period in excess of seven months. While the grinding means described herein is a hammer mill, other mills may be employed including comminution or knife mills, pin mills, disc mills, and fluid energy or jet grinding mills.

An exemplary hammer mill is the Model A Pulva-Sizer sold by the Pulva Corporation, Perth Amboy, NJ (hereinafter referred to as an A-Mill). The rotor of the Pulva-Sizer hammer mill has stirrup-type hammers, operating at a maximum speed of about 21,000 feet per second (9,600 rpm). Particles are fed into the mill at a rate of about 180 to 200 pounds per hour by operating a feed motor at about 1,900 to 2,600 revolutions per minute. The screen used in the mill to retain the particles preferably has uniform holes with an aperture size between about 0.020 and 0.070 inches. The aperture, or screen-size opening, is the minimum clear space between the edges of an opening in the screen. Another preferred screen is a 1/16 inch herringbone screen.

Another exemplary mill is the laboratory scale Wiley Mill available from AHT Co., Philadelphia, PA (hereinafter referred to as a Wiley Mill).

Based on microscopic analysis, the powdered resin obtained by A-Mill grinding typically provides particle sizes in the range of from about 10 microns (greater than a 400 U.S. mesh number) to about 100 microns (about 140 mesh), with the major portion falling in the range of about 25 microns (greater than a 400 mesh number) to about 50 microns (about 270 mesh).

Powdered resin obtained by Wiley Mill grinding typically provides particle sizes in the range of from about 10 microns (greater than a 400 mesh number) to about 450 microns (about 35 mesh), with the major portion falling in the range of between about 100 microns (about 140 mesh) and 300 microns (about 45 mesh), and a substantially trace amount of large bead particles greater in size than 500 microns (below a 30 mesh number).

The following Examples illustrate the stabilization of a powdered cation ion exchange resin in the ammonium form by the resin-stabilizing method of this invention, but are not intended to be construed as limiting.

EXAMPLE 1: Preparation Of And Shelf Life Of A Powdered Cation Exchange Resin In The Ammonium Form (PCN)

A strongly acidic cation exchange resin having a sulfonated styrene-divinylbenzene resin matrix, Kastel H$^+$ (Montecatini, Italy) was substantially converted to the ammonium form with ammonium sulfate to provide a resin having about 93 percent to about 99 percent PCN (powdered cation exchange resin in the ammonium form). Conversion of the resin from the hydrogen form to the ammonium form was accomplished by treating the cation exchange resin as supplied with a 10-fold calculated stoichiometric excess of aqueous ammonium sulfate using a columnar technique [R. Kunin, Ion Exchange Resins, pages 346-347, 2nd Edition, Robert F. Krieger Publishing Company, Inc., Malabar, FL (1985)].

Six runs were conducted treating samples 1 and 2 with 20 percent ammonium sulfate, samples 3 and 4 with 15 percent ammonium sulfate, and samples 5 and 6 with 10 percent ammonium sulfate.

As shown in the following Table, the cation exchange resin treated with aqueous solutions containing about 15 and 20 percent ammonium sulfate was substantially converted to about 93 to about 99 percent of the ammonium form. The level of conversion obtained with a 10 percent ammonium sulfate solution was less than desirable for industrial use.

## Conversion With 10-Fold Excess Aqueous Ammonium Sulfate [ASTM Procedure Part 31, p. 1098 (1978)]

| Sample No. | Percent Ammonium Sulfate | Percent Conversion |
|---|---|---|
| 1 | 20 | 98 |
| 2 | 20 | 97.7 |
| 3 | 15 | 95.7 |
| 4 | 15 | 93.5 |
| 5 | 10 | 86.8 |
| 6 | 10 | 86.3 |

The foregoing cationic exchange resin in the ammonium form was powdered by feeding particles of the resin into a hammer mill at a rate of about 20 to about 100 pounds per hour by operating the feed motor at about 9,000 to 10,000 revolutions per minute and grinding the particles to a size from about 10 microns to about 450 microns. Grinding was stopped when the size of the majority of the particles fell within a range of about 100 microns to about 300 microns and only trace amounts of particles having a size greater than 500 microns were visible under microscopic analysis using an optical microscope with a calibrated plate.

The resulting PCN was packaged in one-quart containers for storage. Shelf life was determined based on the ability of the resin to maintain its predetermined floccing capacity. Floccing capacity was determined by titrating the freshly-prepared PCN with a strongly basic anion exchange resin standard to determine the cation-anion ratio required to achieve a substantially clear effluent. The anion exchange resin used as the standard (hereinafter SAR) is a styrene-divinylbenzene type resin in the hydroxide form available from Dow Chemical Co. as Dowex SPR and ground to a powder and sold under the designation Powdex PAO by The Graver Company, Union, NJ.

The titration procedure for determining cation-anion ratio (floccing capacity) was as follows. 10 grams of PCN were placed in a one liter flask, along with 600 milliliters deionized water. Using a magnetic stirrer, the PCN was stirred at a relatively moderate rate with a magnetic stirring bar. Meanwhile, 26 grams of wet PAO were weighed. Small increments of wet SAR were added to the PCN in water, stirring after each addition for about 30 seconds, and then allowing the resin to settle. The supernatant (effluent) was visually compared against an effluent standard of 30 parts per million turbidity prepared from cation exchange resin fines as described above (PCN-The Graver Co., Union, NJ). (See Also ASTM Part 31, p. 231, 1978).

Titration was carried out to a predetermined endpoint and the amount of wet PAO was recorded. For shelf life studies, the predetermined endpoint was where the effluent was substantially clear. The floccing capacity was determined from the cation-anion ratio as (a percentage of) the dry-weight basis of cation exchange resin to PAO.

Floccing capacity was determined periodically during a storage period of about 8 months (243 days) to observe how this predetermined floccing capacity was maintained. As shown below, the shelf life of a laboratory-prepared PCN deteriorated on storage, based on its continuously decreasing floccing capacity.

FLOCCING CAPACITY* OF PCN ON STORAGE

| 0 | 65 | 140 | 243 |
|------|------|------|------|
| Days | Days | Days | Days |
| 42.7 | 27.9 | 12.9 | 5.6 |

*Also referred to as cation-anion ratio.

Two lots (A and B) of plant-prepared PCN (Powdered Cation Exchange Resin in Ammonium Form) were obtained after they had been subjected to a rejuvenating hot water rinse to increase their floccing capacity. As shown below, the shelf life of the rejuvenated PCN deteriorated rapidly within a short storage period of 1 to 2 months to again require a rejuvenating hot water rinse.

FLOCCING CAPACITY OF REJUVENATED PCN

| Days Stored | Lot A | Lot B |
|-------------|-------|-------|
| Zero | 19.6 | 22.4 |
| 10 | -- | 14.6 |
| 13 | 13.2 | -- |
| 28 | -- | 9.6 |
| 36 | 8.6 | -- |
| 51 | -- | 8.3* |
| 64 | 5.6* | -- |

*Each resin was subjected to a rejuvenating hot water rinse 5 days later, which increased the floccing capacity of Lot A to about 21.1 and of Lot B about to 41.9.

The foregoing data illustrates the instability of PCN, and the need for stabilization by removing the free acid present in the resin matrix by a method other than hot water rinsing.

EXAMPLE 2: Stabilization Of PCN

This Example illustrates the resin stabilizing method of this invention for scavenging the free acid present in the resin matrix of a cation exchange resin in the ammonium form (95 percent conversion). For this purpose, a strongly basic gel-type anion exchange resin, AMBERLITE IRA-411 (Rohm And Haas Company, Philadelphia, PA), was converted from its chloride form, as supplied by the manufacturer, to the hydroxide form (hereinafter, acid scavenging resin). Conversion was accomplished by treating the resin in a column with dilute (4 percent) aqueous sodium hydroxide. [(ASTM, Part 31, p. 1101 (1978))]. Conversion was 90 percent.

The converted anion exchange resin was used to scavenge free acid from a cation exchange resin in the ammonium form as follows.

PCN was prepared according to the procedure of Example 1, except that a relatively small amount of the acid-scavenging resin in the hydroxide form was combined with the cation exchange resin prior to grinding. Three separate resins were made using differing amounts of acid-scavenging resin, as shown in the following

6

Table, and shelf stability data were obtained.

### FLOCCING CAPACITY OF STABILIZED PCN ON STORAGE

| Run Percent No. | Cation Exchange Resin (percent by wt.) | Scavenging Anion Resin (percent by wt.) | Zero Days | 62 Days | 127 Days | 230 Days |
|---|---|---|---|---|---|---|
| 1 | 95 | 5 | 25.7 | 22.9 | 22.6 | 23.5 |
| 2 | 92 | 8 | 12.7 | 12.5 | 12.6 | -- |
| 3 | 89 | 11 | 13.7 | 11.3 | 13.4 | 13.6 |

The data show that the PCN was substantially stabilized based on its substantially unchanged floccing capacity over a period in excess of seven months storage. Measured deviations in the values obtained, where observed, were determined to be within experimental error. Thus, the shelf life of PCN was substantially increased.

EXAMPLE 3: Cationic Polymers As Resin Stabilizers

PCN was obtained from two plant runs (Lot C and Lot D) (95 percent) that had deteriorated and had been subjected to a rejuvenating hot water rinse. An attempt was made to stabilize the rejuvenated resins by adding a cationic polymer in an amount of about 0.1 percent. For Lot C, the cationic polymer designated "Betz 1175" was used, and for Lot D, the cationic polymer designated "Cat Floc T" (a diallyl-dimethyl-ammonium chloride flocculating agent that is commercially available from Calgon Corp., Pittsburgh Activated Carbon Division, Pittsburgh, PA) was used. The floccing capacities measured by the titration procedure of Example 1 are shown below.

### FLOCCING CAPACITY OF REJUVENATED PCN CONTAINING CATIONIC POLYMER

| Days Stored | Lot C | Lot D |
|---|---|---|
| 0 | 18.5 | 19.4 |
| 10 | -- | 10.0 |
| 13 | 14.1 | -- |
| 28 | -- | 10.2 |
| 36 | 9.1 | -- |
| 51 | -- | 7.6 |
| 69 | 7.3 | -- |

The data show that the shelf life of the rejuvenated PCN again continuously deteriorated in a manner generally similar to that observed with the untreated rejuvenated PCN of Example 1.

The present invention has been described with reference to preferred embodiments. Modifications and/or variations of the disclosed compositions and methods may be made without departing from the scope of the invention as described herein. Such modifications will readily apparent to those skilled in the art.

**Claims**

1. A method for stabilizing a powdered cation exchange resin comprising the steps of:

providing a strongly acidic cation exchange resin having a styrene-divinylbenzene resin matrix containing free sulfonic acid;

providing a strongly basic gel-type anion exchange resin having a relatively low degree of crosslinking and a relatively high moisture content in a range of about 55 percent to about 80 percent, based on the total weight of the resin;

combining said cation exchange resin with said anion exchange resin; and

grinding the resulting resin combination to a finely-divided particulate, whereby said powdered cation exchange resin maintains a substantially constant floccing capacity on storage.

2. The method of claim 1 wherein the anion exchange resin has a styrene-divinylbenzene resin matrix that is about 2 percent to about 8 percent crosslinked.

3. The method of claim 1 wherein the cation exchange resin is in the ammonium form and the anion exchange resin is in the hydroxide form.

4. The method of claim 1 wherein the particulate has a particle size having a U.S. mesh number falling in the range of about 30 to about 400.

5. The method of claim 1 wherein the anion exchange resin is present in an amount of about 3 to about 15 percent, based on the total weight of the resin.

6. The method of claim 1 wherein the step of grinding the cation exchange resin with the anion exchange resin includes the steps of feeding the resin combination into a hammer mill and grinding the combination.

7. A powdered cation exchange resin combination prepared by the method of claim 1 having a shelf life of at least six months.

8. A substantially stabilized powdered cation exchange resin comprising from about 90 to about 95 percent strongly acidic cation exchange resin in ammonium form having a styrene-divinylbenzene matrix, from about 5 to about 10 percent of a strongly basic gel-type anion exchange resin in hydroxide form having a styrene-divinylbenzene matrix that is lightly crosslinked and having a moisture content of about 55 to about 80 percent, based on the total weight of the resin, said powdered resin having a particle size distribution with a U.S. mesh number in the range of from about 30 mesh to about 400 mesh and a predetermined, measurable floccing capacity that is maintained over a period of storage of at least about six months.

9. The powdered resin of claim 8 wherein the U.S. mesh number for the majority of the particles is from about 140 mesh to greater than 400 mesh.